# EUROPEAN PATENT SPECIFICATION

(11) **EP 0 961 552 B1**
(45) Date of publication and mention of the grant of the patent: **16.06.2004**
(21) Application number: 96934726.9
(22) Date of filing: 15.10.1996
(51) Int. Cl.: A23L 1/305, A23L 1/30

(54) **NUTRITIONAL SUPPORT OF PAEDIATRIC PATIENTS**
ZUSATZNAHRUNG FÜR KINDPATIENTEN
MAINTIEN NUTRITIONNEL DE PATIENTS EN PEDIATRIE

(30) Priority: 27.10.1995 US 549559
(43) Date of publication of application: 08.12.1999
(73) Proprietor: SOCIETE DES PRODUITS NESTLE S.A., 1800 Vevey (CH)
(72) Inventor: TRIMBO, Susan, L., MILLINGTON, NJ 07946 (US); KRUSEMAN, Jan, CH-1617 Tatroz (CH); KRUZEL, Chris, Chicago, IL 60657 (US); MARK, David, A., Oak Park, IL 60304 (US); REDDY, Sekhar, New Milford, CT 06776 (US)
(86) International application number: PCT/EP1996/004514
(87) International publication number: WO 1997/016079

(56) References cited:
- EP-A- 0 486 425
- WO-A-94/01001
- US-A- 4 112 123
- US-A- 5 232 722
- US-A- 5 340 603

## Description

This invention relates to an enteral composition for use in the treatment and nutritional support of paediatric patients and the methods for the treatment and nutritional support of paediatric patients.

The measurement of diet adequacy in patients, especially paediatric patients, is difficult. Increases in a child's weight and length only grossly reflect nutritional progress. The daily requirements for adequate nutrition are especially significant for the growing child compared with the adult. The relative need for protein, vitamins and minerals remains constant and is greater than that of adults. Moreover, requirements for various vitamins depend on the intake of calories, protein, fat, carbohydrate and specific amino acids.

While the nutritional needs of the paediatric patient differ from adult patients, in health care settings, adult nutritional formulas are the primary form of elemental nutrition currently being used for children. Naturally, adult formulas do no take into effect the known nutritional needs of the paediatric patient. Adult nutritional products must be diluted to decrease concentrations of, for example, protein, sodium, chloride and the renal solute load to levels recommended for children. This dilution reduces the concentrations of other needed nutrients that are often already in concentrations too low for children (i.e. calcium and phosphorous). Thus, providing a nutritional formula designed specifically for children would be advantageous.

A whole protein enteral formula sold under the trademark PEDIASURE® is currently available from Ross Laboratories for nutritional therapy of paediatric patients. PEDIASURE® contains 12% protein, 44% carbohydrates, and 44% fat. The whole protein formula has a protein composition of 82% casein and 18% whey.

Although PEDIASURE® is formulated for children, it is designed to provide nutrition for a limited population, namely children of 1 to 6 years old. As a result thereof, while PEDIASURE® may meet the Recommended Daily Allowances (RDAs), set by the National Academy of Sciences-National Research Council (NAS-NRC), for children 1 to 6 years old in 1000 calories, it requires 1300 calories to meet the RDA of children ages 7 to 10 years.

US 5,340,603 discloses a hypercaloric formula for human infants, inparticular human infants having chronic lung disease. This formula is adapted to infants suffering from a specific pathogenic state and does not correspond to the nutritional needs of children or pediatric patients in general..

EP 0 486 425 discloses a low-pH liquid nutritional formulation with a juice-like consistency or flavor. Although it is known that low-pH formulas are usually prepared for reasons of safety and to avoid the occurrence of bacteria, EP 0 486 425 does not disclose any specific patient population or concrete use of the formulation.

WO 94/01001 relates to a microencapsulated oil or fat and to the use of the microencapsulated product in an infant formula. This reference does not disclose a specific formulation but concentrates on specific values of ω-3 and ω-6 fatty acids found in the microcapsules.

Therefore, a need exists for a nutritional formula designed to meet the nutritional needs of a larger base of paediatric patients as well as paediatric patients recovering from trauma, post-surgical and moderate traumatic injuries and burns.

Accordingly, in one aspect, this invention provides an enteral composition suitable for paediatric patients. The enteral composition comprises: a protein source providing 10% to 14% of the total calories, the protein source comprising casein and whey and providing relatively rapid gastric emptying and reduced gastric reflux; a carbohydrate source; and a lipid source comprising a mixture of medium and long chain triglycerides, at least 20% of the lipid source being medium chain triglycerides.

Preferably, the protein source comprises casein and whey, most preferably about 50% casein and 50% whey, to improve the rate of gastric emptying and reduce the incidence of gastric reflux as compared to diets containing only casein or predominantly casein. The protein preferably also provides a rich source of cysteine; for example the composition may contain about 0.15% of calories as cysteine (about 350 mg/1000 calories).

The carbohydrate source preferably provides about 40% to about 60% of the total calories of the composition. The carbohydrate source is maltodextrin, corn starch or sucrose, and mixtures thereof

The lipid source preferably provides about 30% to about 40% of the total calories of the composition. The long chain triglycerides are preferably selected from soy oil, canola oil, residual milk fat, and soy lecithin. Preferably the lipid source has an omega-3 to omega-6 fatty acid ratio of approximately 4:1 to 6:1.

The composition may further includes at least 100% of the NAS-NRC RDA for children of all vitamins and minerals per 100 kcals.

In another aspect, this invention provides a method for providing nutrition to a paediatric patient. The method comprises the step of administering to the patient a therapeutically effective amount of an enteral composition comprising: a protein source comprising about 10% to about 14% of the total calories; a carbohydrate source; and a lipid source comprising a mixture of medium and long chain triglycerides; the lipid source having an omega-3 to omega-6 fatty acid ratio of about 4:1 to about 6:1 and the medium chain triglycerides comprising at least 25% of the lipid source.

In another aspect, this invention provides a method for providing nutrition to a paediatric patient with moderate needs for tissue repair recovering from trauma, bums or surgery or suffering from cerebral palsy. The method comprises the step of administering to the patient a therapeutically effective amount of an enteral composition comprising: a cysteine-rich protein source which provides about 10% to about 14% of the total calories of the composition; a carbohydrate source; and a lipid source comprising a mixture of medium and long chain triglycerides of which the medium chain triglycerides make up at least 25%.

In another aspect, this invention provides the use of a lipid source in the form of a mixture of medium chain triglycerides and long chain triglycerides of which the medium chain triglycerides comprises at least about 25% and having an omega-3 to omega-6 fatty acid ratio of about 4:1 to about 6:1, in the preparation bf an enteral composition for providing nutrition to a paediatric patient.

In another aspect, this invention provides the use of a cysteine-rich protein source and a lipid source in the form of a mixture of medium chain triglycerides and long chain triglycerides of which the medium chain triglycerides comprises at least about 25%, in the preparation of an enteral composition for providing nutrition to a paediatric patient suffering from cerebral palsy or recovering from trauma, bums or surgery and having moderate needs for tissue repair.

The invention has the advantage that it provides enteral composition that is ready-to-use, nutritionally complete, and contains proteins, lipids, carbohydrates and vitamins and minerals in proportions appropriate for children ages 1-10 years.

Moreover, the enteral composition has optimal tolerance and absorption in children ages 1-10 years.

Also the protein source in a concentration that is adequate to support growth and moderate needs for tissue repair without imposing an undue nitrogen burden on renal function.

Embodiments of the invention are now described by way of example only.

Nutritional support of hospitalised children requires prevention, recognition, and treatment of the nutritional depletion that may occur with illness. The goals of nutritional support include stabilising metabolic state, maintaining body mass, and/or facilitating growth and promoting tissue repair in the presence of disease and/or trauma. While diseases relating to nutritional deficiency are unusual in first world countries, other disease states exist that alter intake, absorption or metabolism. Certain health conditions can impair the nutrient absorption and/or reduce gastrointestinal tolerance for diets which are based on whole proteins, long-chain fatty acids and/or complex carbohydrates. Hence there is a need for an enteral composition which is able to provide adequate nutrition to children.

The enteral composition which is suitable for supplying nutrition to paediatric patients is made up of a protein source, a carbohydrate source, and a lipid source.

The protein source provides about 10% to 14% of the total calories of the composition. For example, the protein source may provide about 12% of the total calories of the composition. This protein concentration is adequate to support growth and moderate needs for tissue repair without imposing an undue nitrogen burden on renal function for children ages 1 to 10 years.

The protein source preferably comprises a mixture of casein and whey proteins. The whey protein may be present in whole or in hydrolyzed form. Preferably, the protein source comprises at least about 50% whey protein; for example in the form of hydrolyzed whey. This protein source reduces the incidence of gastric reflux because gastric emptying is faster than with diets containing casein or predominantly casein. Also, whey protein serves as a rich source of the amino acid cysteine. Cysteine is a limiting amino acid for the formation of glutathione, and glutathione needs may be higher in children with infectious or inflammatory conditions. Preferably, the enteral composition contains approximately 0.15% of calories as cysteine (approximately 350 mg per 1000 calories).

The carbohydrate source provides about 40% to about 60% of the caloric content of the composition. For example, the carbohydrate source may provide about 51% of the caloric content of the composition. A number of carbohydrates can be used including maltodextrin, hydrolyzed corn starch and/or sucrose.

The lipid source includes a mixture of medium chain triglycerides (MCT) and long chain triglycerides (LCT). Preferably the lipid source provides about 30% to about 40% of the caloric content of the composition. For example, the lipid source may provide about 37% of the caloric content of the composition. The lipid profile is designed to meet essential fatty acid (omega-3 and omega-6) needs of children, and for example comprises about 12.6% of essential fatty acids based on total calories.

The lipid source preferably includes at least about 20 to about 30% of medium chain triglycerides. For example, MCTs may make up at least about 25% of the lipid source.

Suitable sources of long chain triglycerides are canola oil, soy oil, residual milk fat, and soy lecithin. The lipid profile of the enteral composition is preferably designed to have a polyunsaturated fatty acid omega-6 (n-6) to omega-3 (n-3) ratio of about 4:1 to about 6:1. For example, the n-6 to n-3 fatty acid ratio may be about 5:1. Both the omega-6 and omega-3 fatty acids are provided in sufficient quantity to meet tissue growth maintenance needs. To this end, the source of omega-6 fatty acids preferably provides about 4 to about 12% of the total calories. The omega-3 fatty acid source is preferably present in the range of approximately 0.8-3.0% of the total calories. In addition to the absorption/tolerance benefits of a moderate LCT content, the enteral composition less likely to be immunosuppressive due to the low percentage of omega-6 fatty acids.

By way of example, and not limitation, an example of a suitable lipid profile that may be used in the enteral composition is as follows:

| Lipid Profile (42.0 grams/litre) | | |
|---|---|---|
| COMPONENT | % of Lipids | Grams/Litre |
| C6:0 | 0.6 | 0.3 |
| C8:0 | 14.0 | 5.9 |
| C10:0 | 6.7 | 2.8 |
| C12:0 | 0.3 | 0.1 |
| C14:0 | 0.4 | 0.2 |
| C16:0 | 6.4 | 2.7 |
| C18:0 | 2.2 | 0.9 |
| C20:0 | 0.5 | 0.2 |
| **TOTAL SAT** | **31.1** | **13.1** |
| C16:1 | 0.4 | 0.2 |
| C18:1 | 24.1 | 10.1 |
| C20:1 | 0.3 | 0.1 |
| **TOTAL MONO** | **24.8** | **10.4** |
| C18:2 n6 | 27.8 | 11.7 |
| C18:3 n3 | 5.7 | 2.35 |
| **TOTAL POLY** | **33.5** | **14.05** |
| **TOTAL, FA'S** | **89.4** | **37.55** |
| **NON-FA'S** | **10.6** | **4.45** |
| **TOTAL, ALL** | **100.0** | **42.0** |

Where "FA" means fatty acid, and "Sat" means saturated.

P/S Ratio = 1.1; (Saturated includes MCT)

N6 = 27.8% of fat (22.7 g/L) 10.5% of total calories

N3 = 5.7% of fat (2.35 g/L) 2.1% of total calories

N3 to N6 Ratio = 5.0:1.

The lipid source may be made up as follows:

| **FAT SOURCE** | **% BY WT** | **%TOTAL KCAL** |
|---|---|---|
| MCT | 25% | 8.7& |
| CANOLA | 24% | 9.1% |
| SOY | 43% | 16.2% |
| MILK* | 3% | 1.1% |
| SOY LECITHIN | 5% | 1.9% |
| **TOTAL** | 100% | 37.0 |

| | | |
|---|---|---|
| *Residual milk fat (with the casein and whey protein) contributes to the total lipid content | | |

The enteral composition preferably includes a specialised vitamin and mineral profile. In particular, the composition includes a source of vitamins and minerals providing at least 100% of the NAS-NRC Recommended Daily Allowance for children. The vitamin and mineral requirements are met in 1000 kcal per day because this intake is practical, achievable and easily tolerated by children ages 1-10 years, even though it is somewhat less than healthy children normally eat. Unlike prior compositions, the enteral composition meets NAS-NRC RDAs for children ages 1-10 years in 1000 calories. The high vitamin and mineral concentration of the enteral composition is of practical benefit because typical feeding regimens (e.g. 50 ml/hour for 20 hours/day) will meet all needs. However, none of the vitamin or mineral concentrations are so high that there is any risk of approaching toxic levels, even at 2000-2500 kcal per day.

The enteral composition may include a source of beta-carotene. Beta-carotene, formerly considered only as a precursor to vitamin A, is an important nutrient with anti-oxidant properties. For example, the composition may include about 0.5 to about 2.0 mg of beta-carotene per 1000 calories. This amount of beta-carotene is sufficient to maintain plasma beta-carotene concentration in the paediatric patient.

The enteral composition may further include certain electrolyte concentrations. The electrolyte concentrations are set to meet needs without providing an undue renal solute burden on kidney function. To this end, sodium is preferably present in a range of about 420 to about 500 mg/L, potassium is preferably present in a range of about 1260 to about 1380 mg/L and chloride is preferably present in a range of about 1040 to about 1120 mg/L. The renal solute load is, for example, present in a range of about 200 to about 210 Mosm. In a preferred example, the electrolyte concentrations are as follows: sodium is present at about 460 mg/L; potassium is present at about 1320 mg/L; chloride is present at about 1080 mg/L; and the renal solute load is at about 205 Mosm.

The enteral composition is in the form of a ready-to-use enteral formulation. The composition can be used as a supplement or for total enteral nutritional support. The composition can be tube-fed to a patient, or fed by having the patient drink it. Preferably, the caloric density of the composition is 1.0 kcal/ml. Various flavorants, fibres and other additives may also be present.

The enteral composition may be used for providing nutrition to paediatric patients of ages of 1 to 10 years. Likewise, the composition can be used for providing nutrition to a paediatric patient recovering from surgery, bums or trauma. The diet utilises a significant amount of whey protein, medium chain triglycerides and maltodextrin to enhance absorption and reduce intolerance.

By way of example, and not limitation, suitable compositions that may be used are as follows:

### Examples 1 - 2

The enteral nutritional compositions comprise the following ingredients: protein: casein and whey; carbohydrate: maltodextrin and sucrose; lipid: canola oil, soy oil, coconut oil (MCT), residual milk fat, soy lecithin; water; vitamin A (retinol); beta-carotene; vitamin D, vitamin.E; vitamin K; vitamin C; thiamine B₁; riboflavin B₂; niacin; vitamin B_{6;} folic acid, pantothenic acid, vitamin B₁₂; biotin; choline; taurine; L-carnitine; inositol; calcium; phosphorus; magnesium; zinc; iron; copper; manganese; iodine; sodium; potassium; chloride; chromium; molybdenum; and selenium.

The enteral of example 1 includes dietary fibre while that of example 2 does not.

The composition have the following nutrient composition (per 1000 calories):

| Paediatric Enteral Nutritional Compositions | | | |
|---|---|---|---|
| COMPOSITION (Per Litre) | UNITS | Example 1 | Example 2 |
| Cal. Density | Kcal/ml | 1.0 | 1.0 |
| Cals./Can | Calories | 250 | 250 |
| PROTEIN | g/L (% Kcal) | 30.0 (12%) | 30.0 (12%) |
| Casein | | 50% | 50% |
| Whey | | 50% | 50% |
| CARBOHYDRATE | g/L (% Kcal) | 127.5 (51%) | 127.5 (51%) |
| Maltodextrin | | 66% | 66% |
| Sucrose | | 34% | 34% |
| FIBER | g/L | 0.0 | 6.0 |
| LACTOSE CONTENT | g/L | 1.5 | 1.5 |
| FAT | g/L (% Kcal) | 42.0 (37%) | 42.0 (37%) |
| % by weight | | | |
| Soy oil | | 43% | 25% |
| MCT | | 25% | 25% |
| Canola oil | | 24% | 24% |
| Soy Lecithin | | 5% | 5% |
| Residual milk fat | | 3% | 3% |
| MCT | g/L (% Kcal) | 10.5 (8.7%) | 10.5 (8.7%) |
| Linolenic (N6) | | 11.710.5%) | 11.7 (10.5%) |
| Linoleic (N3) | | 2.35 (2.1%) | 2.35 (2.1%) |
| N6:N3 ratio | | 5.0:1 | 5.0:1 |
| OSMOLALITY | MOSM | 350 | 350 |
| RENAL SOLUTE LOAD | MOSM/L | 205 | 205 |
| MCT:LCT RATIO | | 25:75 | 25:75 |
| volume to meet or exceed NAS-NRC RDA | | 1.0 L | 1.0 L |
| DENSITY | g/ml | 1.057 | 1.060 |
| WATER | ml/L | 850(85%) | 840(84%) |
| CAL/gN | Ratio | 210:1 | 210:1 |
| NPC/gN | Ratio | 185:1 | 185:1 |

### Examples 3-4

The enteral compositions may be provided in storage stable, ready to use, liquid form in cans or in retort processed, screw-topped containers. Examples 3-4 show the formulations for 250 ml cans and one litre containers with respect to NAS-NRC recommended dietary allowances for children 7-10 years of age as follows:

| Paediatric Nutritional Formulations in 250 ml and 1 L Containers | | | | | | |
|---|---|---|---|---|---|---|
| Enteral composition | Units | NAS-RC* | Amount per 250ml | %NAS-NRC | Amount per Litre | %NAS-NRC |
| Calories | Kcal | ---- | 250 | ** | 1000 | ** |
| Protein | g | 28.0 | 7.5 | 27 | 30.0 | 107 |
| Carbohydrate | g | ---- | 31.9 | ** | 127.5 | ** |
| Fat | g | ---- | 10.5 | ** | 42.0 | ** |
| Water | ml | ---- | 212 | ** | 850 | ** |
| Vitamin A*** | I.U. | 2330 | 600 | 26 | 2400 | 103 |
| β-carotene | mg | ** | 0.25 | ** | 1.0 | ** |
| Vitamin D | I.U. | 400 | 140 | 35 | 560 | 140 |
| Vitamin E | I.U. | 7 | 7 | 100 | 28 | 400 |
| Vitamin K | µg | ** | 7.5 | ** | 30 | ** |
| Vitamin C | mg | 45 | 25 | 55 | 100 | 220 |
| Thiamine B₁ | mg | 1.0 | 0.6 | 60 | 2.4 | 240 |
| Riboflavin B₂ | mg | 1.2 | 0.5 | 42 | 2.0 | 167 |
| Niacin | mg | 13 | 5 | 38 | 20 | 154 |
| Vitamin B₆ | mg | 1.4 | 0.6 | 43 | 2.4 | 171 |
| Folic Acid | µg | 100 | 100 | 100 | 400 | 400 |
| Pantoth. Acid | mg | ** | 2.5 | ** | 10 | ** |
| Vitamin B₁₂ | µg | 1.4 | 1.5 | 107 | 6 | 428 |
| Biotin | µg | ** | 75 | ** | 300 | ** |
| Choline | mg | ** | 75 | ** | 300 | ** |
| Taurine | mg | ** | 20 | ** | 80 | ** |
| L-Carnitine | mg | ** | 10 | ** | 40 | ** |
| Inositol | mg | ** | 20 | ** | 80 | ** |
| Calcium | mg | 800 | 250 | 31 | 1000 | 125 |
| Phosphorus | mg | 800 | 200 | 25 | 800 | 100 |
| Magnesium | mg | 170 | 50 | 29 | 200 | 118 |
| Zinc | mg | 10 | 3.8 | 38 | 15 | 150 |
| Iron | mg | 10 | 3.5 | 35 | 14 | 140 |
| Copper | mg | ** | 0.25 | ** | 1.0 | ** |
| Manganese | mg | ** | 0.4 | ** | 1.5 | ** |
| Iodine | µg | 120 | 30 | 25 | 120 | 100 |
| Sodium | mg | ** | 115 | ** | 460 | ** |
| Potassium | mg | ** | 330 | ** | 1320 | ** |
| Chloride | mg | ** | 270 | ** | 1080 | ** |
| Chromium | µg | ** | 7.5 | ** | 30 | ** |
| Molybdenum | µg | ** | 7.5 | ** | 30 | ** |
| Selenium | µg | 30 | 7.5 | 25 | 30 | 100 |

| | | | | | | |
|---|---|---|---|---|---|---|
| ** NAS-NRC RDA not established | | | | | | |
| *** 26% from Vit. A plus a max. of 416 I.U. from conversion of beta-carotene (Total=44% NAS-NRC RDA) | | | | | | |

### Example 5

Another enteral composition is shown in the following Example 5. The following table shows a comparison of the composition of Example 5 with the NAS-NRC RDAs and with a prior paediatric formulation, PEDIASURE® available from Ross Laboratories, as follows:

| Comparison of Composition of Example 5 with PEDIASURE® and NAS-NRC RDAs (per 1000 Calories) | | | | | | |
|---|---|---|---|---|---|---|
| | | | NAS-NRC RDAs | | | |
| Nutrient composition | Units | Pediasure® | 1-3 Yrs | 4-6 Yrs | 7-10 Yrs | Example 5 |
| CAL. Density | Kcal/ ml | 1.0 | ** | ** | ** | 1.0 |
| Protein | g (%) | 30.0 (12%) | 16 | 24 | 28 | 30.0(12%) |
| Casein | | 82% | | | | 50% |
| Whey | | 18% | | | | 50% |
| Carbohydrate | g (%) | 109.7 (44%) | ** | ** | ** | 127.5 (51%) |
| FAT | g %) | 49.7 (44%) | ** | ** | ** | 42.0 (37%) |
| Safflower Oil | | 50% | | | | - |
| Canola Oil | | -- | | | | 24% |
| Soy Oil | | 30% | | | | 43% |
| MCT | | 20% | | | | 25% |
| Residual Milk Fat | | -- | | | | 3% |
| Soy Lecithin | | 5% | | | | 5% |
| N6:N3 Ratio | | 9:1 | | | | 5:1 |
| Fibre | g | 5.0 | ** | ** | ** | 6.0 or 0.0 |
| Water | ml | 844 | ** | ** | ** | 840 or 850 |
| Vitamin A (retinol) - | IU | 2570 | 1325 | 1665 | 2330 | 2400 |
| Beta-carotene | mg | 0 | ** | ** | ** | 1.0 |
| Vitamin D | IU | 510 | 400 | 400 | 400 | 560 |
| Vitamin E | IU | 23 | 6 | 7 | 7 | 28 |
| Vitamin K | µg | 38 | ** | ** | ** | 30 |
| Vitamin C | mg | 100 | 40 | 45 | 45 | 100 |
| Thiamine B₁ | mg | 2.7 | 0.7 | 0.9 | 1.0 | 2.4 |
| Riboflavin B₂ | mg | 2.1 | 0.8 | 1.1 | 1.2 | 2.0 |
| Niacin | mg | 17 | 9 | 12 | 13 | 20 |
| Vitamin B₆ | mg | 2.6 | 1.0 | 1.1 | 1.4 | 2.4 |
| Folic acid | µg | 370 | 50 | 75 | 100 | 400 |
| Pantoth. acid | mg | 10 | ** | ** | ** | 10 |
| Vitamin b₁₂ | µg | 6 | 0.7 | 1.0 | 1.4 | 6 |
| Biotin | µg | 320 | ** | ** | ** | 300 |
| Choline | mg | 300 | ** | ** | ** | 300 |
| Taurine | mg | 72 | ** | ** | ** | 80 |
| L-carnitine | mg | 17 | ** | ** | ** | 40 |
| Inositol | mg | 80 | ** | ** | ** | 80 |
| Calcium | mg | 970 | 800 | 800 | 800 | 1000 |
| Phosphorus | mg | 800 | 800 | 800 | 800 | 800 |
| Ca:P | Wt | 1.21:1 | 1.0:1 | 1.0:1 | 1.0:1 | 1.25:1 |
| Magnesium | mg | 200 | 80 | 120 | 170 | 200 |
| Zinc | mg | 12 | 10 | 10 | 10 | 15 |
| Iron | mg | 14 | 10 | 10 | 10 | 14 |
| Copper | mg | 1.0 | ** | ** | ** | 1.0 |
| Manganese | mg | 2.5 | ** | ** | ** | 1.5 |
| Iodine | µg | 97 | 70 | 90 | 120 | 120 |
| Sodium | mg | 380 | ** | ** | ** | 460 |
| Potassium | mg | 1310 | ** | ** | ** | 1320 |
| Chloride | mg | 1010 | ** | ** | ** | 1080 |
| Na:K | Molar | 0.49:1 | ** | ** | ** | 0.59:1 |
| (Na+K)/Cl | Molar | 1.75 | ** | ** | ** | 1.71 |
| Chromium | µg | 30 | ** | ** | ** | 30 |
| Molybdenum | µg | 36 | ** | ** | ** | 30 |
| Selenium | µg | 23 | 20 | 20 | 30 | 30 |

| | | | | | | |
|---|---|---|---|---|---|---|
| ** NAS-NRC RDA not established. | | | | | | |

## Claims

1. An enteral composition for paediatric patients comprising:
a protein source providing 10% to 14% of the total calories and comprising casein and whey in whole or hydrolysed form;
a carbohydrate source; and
a lipid source providing 30-40% of the total calories of the composition and comprising a mixture of medium and long chain triglycerides, at least 20% of the lipid source being medium chain triglycerides.

2. A composition of Claim 1 in which the protein source comprises 50% casein and 50% intact or hydrolyzed whey.

3. A composition of Claim 1 in which the carbohydrate component is sucrose, maltodextrin or corn starch, and mixtures thereof

4. A composition of Claim 1 in which the long chain triglycerides are selected from soy oil, canola oil, residual milk fat, and soy lecithin.

5. A composition of Claim 1 in which the lipid source has an omega-6 to omega-3 fatty acid ratio of 4:1 to 6:1.

6. A composition of Claim 5 in which the omega-6 fatty acids provide 10.5% of total calories and the omega-3 fatty acids provide 2.1% of total calories.

7. A composition of Claim 1 further comprising at least 100% of the NAS-NRC RDA of all vitamins and minerals in 1000 calories.

8. A composition of any of claims 1 to 7 in which the protein source provides cysteine in an amount of 0.15% of calories of the composition.

9. The use of a lipid source in the form of a mixture of medium chain triglycerides and long chain triglycerides of which the medium chain triglycerides comprises at least about 25% and having an omega-3 to omega-6 fatty acid ratio of 4:1 to 6:1, in the preparation of an enteral composition for providing nutrition to a paediatric patient.

## Patentansprüche

1. Enterale Zusammensetzung für pädiatrische Patienten, die umfaßt:
eine Proteinquelle, die 10 bis 14% der Gesamtkalorien liefert und Casein und Molke in vollständiger oder hydrolysierter Form umfaßt;
eine Kohlenhydratquelle; und
eine Lipidquelle, die 30 bis 40% der Gesamtkalorien der Zusammensetzung liefert und eine Mischung aus mittel- und langkettigen Triglyceriden umfaßt, wobei wenigstens 20% der Lipidquelle mittelkettige Triglyceride sind.

2. Zusammensetzung nach Anspruch 1, wobei die Proteinquelle 50% Casein und 50% intakte oder hydrolysierte Molke umfaßt.

3. Zusammensetzung nach Anspruch 1, wobei die Kohlenhydratkomponente Saccharose, Maltodextrin oder Maisstärke und Mischungen daraus ist.

4. Zusammensetzung nach Anspruch 1, wobei die langkettigen Triglyceride ausgewählt sind aus Sojaöl, Canolaöl, restlichem Milchfett und Sojalecithin.

5. Zusammensetzung nach Anspruch 1, wobei die Lipidquelle ein Verhältnis von Omega-6- zu Omega-3-Fettsäuren von 4:1 bis 6:1 aufweist.

6. Zusammensetzung nach Anspruch 5, wobei die Omega-6-Fettsäuren 10,5% der Gesamtkalorien liefern und die Omega-3-Fettsäuren 2,1% der Gesamtkalorien liefern.

7. Zusammensetzung nach Anspruch 1, die außerdem wenigstens 100% der NAS-NRC RDA aller Vitamine und Mineralien in 1000 Kalorien aufweist.

8. Zusammensetzung nach irgendeinem der Ansprüche 1 bis 7, wobei die Proteinquelle Cystein in einer Menge von 0,15% der Kalorien der Zusammensetzung liefert.

9. Verwendung einer Lipidquelle in Form einer Mischung aus mittelkettigen Triglyceriden und langkettigen Triglyceriden, bei der die mittelkettigen Triglyceride wenigstens etwa 25% ausmachen, und die ein Verhältnis von Omega-3- zu Omega-6-Fettsäuren von 4:1 bis 6:1 aufweist, zur Herstellung einer enteralen Zusammensetzung zur Ernährung eines pädiatrischen Patienten.

## Revendications

1. Composition entérale pour patients pédiatriques, comprenant :
une source de protéines fournissant 10% à 14% des calories totales et comprenant de la caséine et du petit lait sous forme entière ou sous forme hydrolysée ;
une source de glucides ; et
une source de lipides fournissant 30 à 40% des calories totales de la composition et comprenant un mélange de triglycérides à chaîne moyenne et de triglycérides à chaîne longue, une proportion d'au moins 20% de la source de lipides consistant en triglycérides à chaîne moyenne.

2. Composition suivant la revendication 1, dans laquelle la source de protéines comprend 50% de caséine et 50% de petit lait intact ou hydrolysé.

3. Composition suivant la revendication 1, dans laquelle le constituant glucidique est le saccharose, la maltodextrine ou l'amidon de maïs, et leurs mélanges.

4. Composition suivant la revendication 1, dans laquelle les triglycérides à chaîne longue sont choisis entre l'huile de soja, l'huile de canola, la matière grasse laitière résiduelle et la lécithine de soja.

5. Composition suivant la revendication 1, dans laquelle la source de lipides a un rapport des acides gras oméga-6 aux acides gras oméga-3 compris dans l'intervalle de 4:1 à 6:1.

6. Composition suivant la revendication 5, dans laquelle les acides gras oméga-6 fournissent 10,5% des calories totales et les acides gras oméga-3 fournissent 2,1% des calories totales.

7. Composition suivant la revendication 1, comprenant en outre au moins 100% de la RDA NAS-NRC de toutes les vitamines et substances minérales dans 1000 calories.

8. Composition suivant l'une quelconque des revendications 1 à 7, dans laquelle la source de protéines fournit de la cystéine en une quantité de 0,15% des calories de la composition.

9. Utilisation d'une source de lipides sous forme d'un mélange de triglycérides à chaîne moyenne et de triglycérides à chaîne longue, dont les triglycérides à chaîne moyenne représentent au moins environ 25%, et ayant un rapport des acides gras oméga-3 aux acides gras oméga-6 compris dans l'intervalle de 4:1 à 6:1, dans la préparation d'une composition entérale destinée à assurer la nutrition d'un patient pédiatrique.
